# EUROPEAN PATENT APPLICATION

(11) **EP 4 611 238 A1**
(43) Date of publication of application: **03.09.2025**
(21) Application number: 24159951.3
(22) Date of filing: 27.02.2024
(51) Int. Cl.: H02M 1/00, A01G 25/00, H02M 3/156, H02M 7/5387

(54) **DRIVING CIRCUIT FOR ELECTRICAL LOAD**

(71) Applicant: Husqvarna AB, 561 82 Huskvarna (SE)
(72) Inventor: Roeder, Jan, 89191 Nellingen (DE); Merkle, Martin, 89168 Niederstotzingen (DE); Schmidt, Hermann, 89081 Ulm (DE)
(74) Representative: Finkele, Rolf

(57) **Abstract**

A driving circuit **(200)** for driving an electrical load **(202)** includes a first high-side transistor **(210)** and a second high-side transistor **(212)**, and a first low-side transistor **(216)** and a second low-side transistor **(218)**. A free-wheeling diode **(220)** provides a path for current from the electrical load **(202)**. A controller **(102)** controls the operation of the transistors. A boost circuit is provided to boost the voltage provided by a power source **(208)** to a higher voltage for driving the electrical load **(202)**. The driving circuit **(200)** is characterized in that the boost circuit includes a third high-side transistor **(224)**, and a capacitor **(226)** configured to provide the higher voltage to the electrical load **(202)**. An inductance of the boost circuit is provided by a coil of the electrical load **(202)**. A diode of the boost circuit is provided by the free-wheeling diode **(220)**. A transistor of the boost circuit is provided by the second low-side transistor **(218)**. The controller **(102)** is further configured to control the operation of the third high-side transistor **(224)**.

## Description

### TECHNICAL FIELD

The present disclosure relates to a circuit arrangement for a valve system. More particularly, the present disclosure relates to a driver circuit for controlling operation of the valve system.

### BACKGROUND

Accurate and reliable delivery of water has, and continues to be, a critical function for irrigating crops, land application of wastewater, gardening applications and environmental control. Since water and electricity are limited resources, efficient methods of ensuring their delivery to the right place and at the right time continue to attract the attention of inventors and designers. Irrigation controllers or timers or water computers have been available for decades and are a cost-effective component for controlling an irrigation system. There are several commercially available, stand-alone water computers that enable a user to preset an irrigation time schedule. These water computers execute a schedule and provide enough power to actuate a latching solenoid thereby providing control for an irrigation valve according to the preset schedule. There are many instances where a plurality of water computers are used in a system, and where they are individually programmed to act in concert with one another to satisfy specific requirements of the system. Such systems typically use driving circuits to control the irrigation valves.

Boost converter circuits in addition to driving circuits are well known in the technical field of electrical motors. Such an exemplary boost converter circuit of a driver circuit for driving an electrical motor is illustrated by European patent EP 3 195 458 B1 (also referred as '458 reference hereinafter). The '458 reference discloses that the driver circuit comprises combined switched inductance boost voltage converter circuitry and switched inductance buck voltage converter circuitry. An input node of the driver circuit is provided to be coupled with the electrical motor coil, which provides the inductive element of both the boost and buck circuitry. Further the boost and buck circuitry share a storage capacitor, which provides the capacitive element of each circuitry, and a voltage developed across the storage capacitor by the boost circuitry forms an input of the switched inductance buck voltage converter circuitry. Bidirectional driving of the electrical motor coil is thus provided from a driver circuit which only need to be supplied with a single unidirectional supply and the current drawn from that supply is significantly reduced because of the way the boost and buck circuitry operate synergistically to recycle electrical power which is moved back and forth between the electrical motor coil and the storage capacitor.

### SUMMARY OF THE INVENTION

According to an aspect of the present invention, a driving circuit for driving an electrical load is provided. The driving circuit includes a first high-side switch, in particular semiconductor switch, more in particular transistor, and a second high-side switch, in particular semiconductor switch, more in particular transistor. The first high-side switch is configured to connect a first terminal of the electrical load with a high potential terminal. The second high-side switch is configured to connect a second terminal of the electrical load with the high potential terminal. The driving circuit further includes a first low-side switch, in particular semiconductor switch, more in particular transistor, and a second low-side semiconductor switch, in particular transistor. The first low-side switch is configured to connect the first terminal of the electrical load with a negative terminal of the power source. The second low-side semiconductor switch is configured to connect the second terminal of the electrical load with the negative terminal of the power source. The driving circuit includes a free-wheeling diode configured to connect the second terminal of the electrical load with the high potential terminal for providing a path for current from the electrical load to the high potential terminal. The driving circuit includes a controller for controlling the operation of the first high-side switch and the second high-side switch and the first low-side switch and the second low-side semiconductor switch. The driving circuit further includes a boost circuit configured to boost the voltage provided by the power source to a higher voltage for driving the electrical load.

The driving circuit is characterized in that the boost circuit includes a third high-side switch, in particular semiconductor switch, more in particular transistor, to connect the first terminal of the electrical load with the positive terminal of the power source. The driving circuit further includes a capacitor configured to connect the high potential terminal and the negative terminal of the power source. The capacitor is configured to provide the higher voltage to the electrical load. An inductance of the boost circuit is provided by a coil of the electrical load. A diode of the boost circuit is provided by the free-wheeling diode. A transistor of the boost circuit is provided by the second low-side semiconductor switch. Further, the controller is further configured to control the operation of the third high-side switch, in particular semiconductor switch, more in particular transistor.

The driving circuit as provided by the present invention offers several advantages. Usage of the components of the existing driving circuit to double up as components of the booster circuit in functionality helps to reduce number of components, and therefore reduces overall cost. Further, the present invention helps in reducing current ripple due to inductance. Reduced switching frequency leads to reduced power loss across the transistor.

According to an exemplary embodiment of the present invention, the free-wheeling diode is an intrinsic diode of the second high-side switch. Thereby, the number of components may be further reduced. Hence, a cost-efficient driving circuit may be providable.
According to an exemplary embodiment of the present invention, the free-wheeling diode is a separate electronic element, particularly a separate electronic element integrated in the driving circuit. Thereby, using the free-wheeling diode independently from the second high-side switch may provide a robust driving circuit.

According to an exemplary embodiment of the invention, the power source is a 3 V DC power source. AA batteries may be easily used with such a driver circuit. As availability of AA batteries is more common in usage, it is easier for a user to work with.

According to an exemplary embodiment of the invention, the boost circuit boosts the voltage provided by the 3 V DC power source to 9V. This allows a user to do away with the usage of 9 V batteries. Further, this helps attain boosted voltage of 9 V with 3 V batteries.

According to an exemplary embodiment of the invention, each of the first high-side switch, the second high-side switch and the third high-side switch is a MOSFET. This allows for better efficiency of operation, reduces heat generation, and provides a longer battery life.

According to an exemplary embodiment of the invention, each of the first low-side switch and the second low-side semiconductor switch is a MOSFET. This allows for better efficiency of operation, reduces heat generation, and provides a longer battery life.

According to an exemplary embodiment of the invention, the electrical load is an irrigation valve. Thus, the driver circuit may be used for controlling the irrigation valve for an irrigation system. The driver circuit may therefore be used for employing an irrigation schedule for the irrigation system with precision.

According to an aspect of the present invention, an irrigation system comprising one or more valves is provided. The one or more valves is actuated by the driving circuit of as per the various exemplary embodiments of the present invention described above. The driver circuit may be used for controlling the irrigation valve for the irrigation system. The driver circuit may therefore be used for employing an irrigation schedule for the irrigation system.

Before discussing the invention with the help of the drawings, the invention will be briefly discussed in general. The driving circuit according to the present invention allows to supply water computers with two AA batteries together supplying 3 V power, instead of current usage of one single 9 V battery. For this, it is required to charge a capacitor to a higher voltage from the 3 V battery. This is usually done with a separate boost converter circuit which consists of a control IC, a coil, a transistor, a diode, and a capacitor. However, a solution with a minimum number of additional components is preferred. Thus, in the present invention, the boost converter architecture is integrated into the already existing valve driving circuit. Hence, usage of the same components for boosting the voltage and switching the valve is to be adapted.

The functionality of the coil of the boost converter is provided by the already existing coil of the valve. The diode of the boost converter already exists in the valve driver and can be reused respectively double used. Even the transistor for charging the coil is already part of the valve driver. Only one additional switch is needed to connect the valve coil with the supply voltage during boost phase.

Advantages of the present invention include reduced number of components, reduced amount of costs, reduced current ripple due to higher inductance, and reduced switching frequency that leads to reduced power loss in the transistor. Further, 1.5 V AA batteries are more common than 9 V batteries. Thus, the present disclosure provides integration of boost architecture into full bridge or H-Bridge with inductive load which may be a valve or a motor. Also, using an inductive load as energy storage for boost converter is provided.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** illustrates an irrigation system having one or more valves, in accordance with an exemplary embodiment of the present disclosure;
**FIG. 2** illustrates a driving circuit for an electrical load, in accordance with an exemplary embodiment of the present disclosure; and
**FIG. 3** illustrates a driving circuit for an electrical load according to the prior art.

### DETAILED DESCRIPTION OF THE DRAWINGS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention may be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left", "right", "horizontal", "vertical", "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

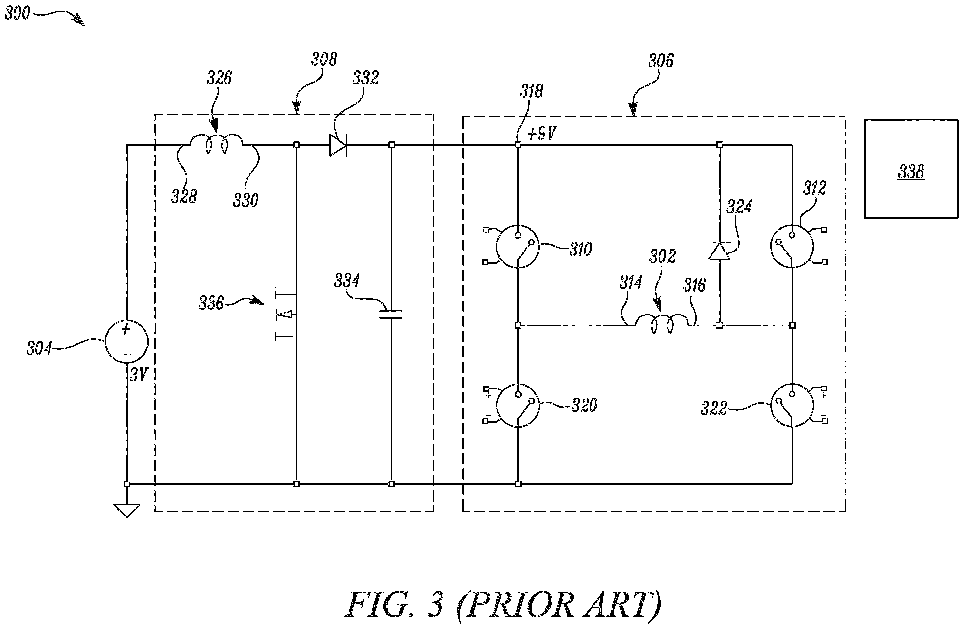

**FIG. 3** illustrates a driving circuit **300** for an electrical load **302** according to the prior art. The driving circuit **300** includes a power source **304**. The power source **304** has a positive terminal or a high-potential terminal and a negative terminal or a low-potential terminal. The driving circuit **300** is broadly divided into a first segment **306** and a second segment **308**. The first segment **306** is a valve driver segment, and the second segment **308** is a boost converter segment.

The first segment **306** of the driving circuit **300** includes a first and a second high-side transistors **310**, **312**. The first high-side transistor **310** is configured to connect a first terminal **314** of the electrical load **302** with a high potential terminal **318**. The second high-side transistor **312** is configured to connect a second terminal **316** of the electrical load **302** with the high potential terminal **318**. The driving circuit **300** further includes a first and a second low-side transistors **320**, **322**. The first low-side transistor **320** is configured to connect the first terminal **314** of the electrical load **302** with a negative terminal of a power source **304**. The second low-side transistor **322** is configured to connect the second terminal **316** of the electrical load **302** with the negative terminal of the power source **304**. The driving circuit **300** includes a free-wheeling diode **324** configured to connect the second terminal **316** of the electrical load **302** with the high potential terminal **318** for providing a path for current from the electrical load **302** to the high potential terminal **318**.

The second segment **308** of the driving circuit **300** includes an inductance coil **326**. The inductance coil **326** has a first end **328** and a second end **330**. The first end **328** of the inductance coil **326** is coupled with the positive terminal of the power source **304**. The driving circuit **300** includes a boost circuit diode **332**. The boost circuit diode **332** is coupled to the second end **330** of the inductance coil **326**. The second segment **308** of the driving circuit **300** further includes a boost circuit capacitor **334**. The boost circuit capacitor **334** is coupled on one end with the boost circuit diode **332** and on the other end with the negative terminal of the power source **304**. The second segment **308** of the driving circuit **300** further includes a boost circuit transistor **336** coupled between the second end **330** of the inductance coil **326** and the negative terminal of the power source **304**.

The inductance coil **326**, the boost circuit diode **332**, the boost circuit capacitor **334** and the boost circuit transistor **336** together define the boost converter segment **308**. During a charge cycle of the boost converter segment **308**, when the boost circuit transistor **336** is switched on, the boost circuit diode **332** is reverse biased and the power source **304** charges the inductance coil **326**. During a discharge cycle of the boost converter segment **308**, when the boost circuit transistor **336** is switched off, the boost circuit diode **332** is forward biased and the inductance coil **326** discharges energy stored during charging through the boost circuit diode **332** and stores the energy in the boost circuit capacitor **334**. With repeated cycles of the boost converter segment **308**, the boost circuit capacitor **334** gets charged to a boosted voltage. The boost circuit capacitor **334** then provides this boosted voltage across the electrical load **302** via the first segment **306** of the driver circuit **300**.

The electrical load **302** receives the boosted voltage across the two terminals **314**, **316**. The driving circuit **300** includes a controller **338** to control the operation of the electrical load **302**. The electrical load **302** is configured to operate in two modes, a first operating mode and a second operating mode. For example, the electrical load **302** may be an irrigation valve configured to switch between an open position and a closed position, wherein the first operating mode may correspond to the open position and the second operating mode may correspond to the closed position or vice versa. In this particular example, the open position is defined when current flows through the electrical load **302** from the first terminal **314** to the second terminal **316**. The closed position is defined when the current flows through the electrical load **302** from the second terminal **316** to the first terminal **314**. For the electrical load **302** to operate in the open position, the first high-side transistor **310** and the second low-side transistor **322** are switched on. Similarly, for the electrical load to operate in the closed position, the second high-side transistor **312**, and the first low-side transistor **320** are switched on. Thus, a controller **338** can control the operation of the electrical load **302** by suitably switching the first and second high-side transistors **310**, **312**, and the first and second low-side transistors **320**, **322**.

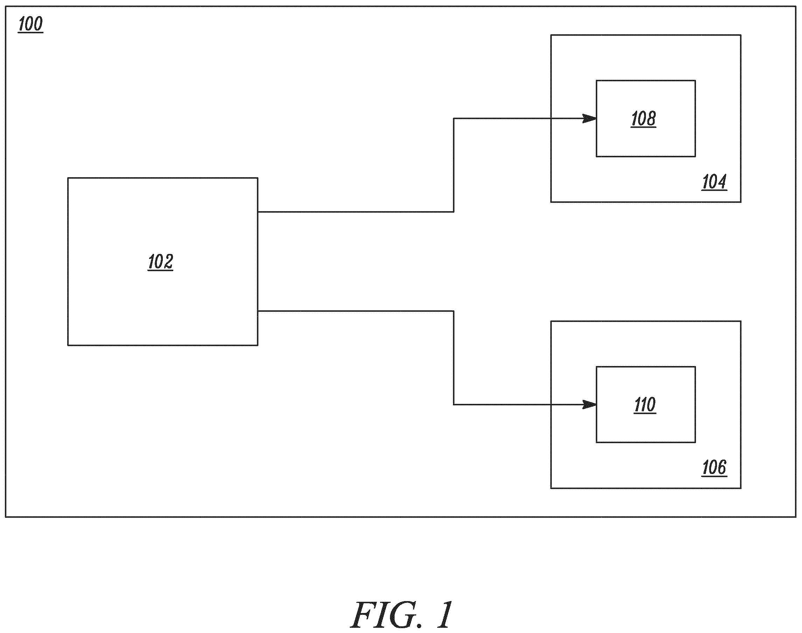

**FIG. 1** illustrates an irrigation system **100** comprising one or more valves **108**, **110**. The irrigation system **100** includes a controller **102** which controls the operation of one or more watering equipment. The illustrated example shows a first watering equipment **104** and a second watering equipment **106**. The controller **102** controls the operation of the one or more watering equipment **104, 106** through controlling the one or more valves **108**, **110.** The one or more valves **108**, **110** are actuated by a driving circuit **200** for an electrical load **202** as shown in **FIG**. **2**.

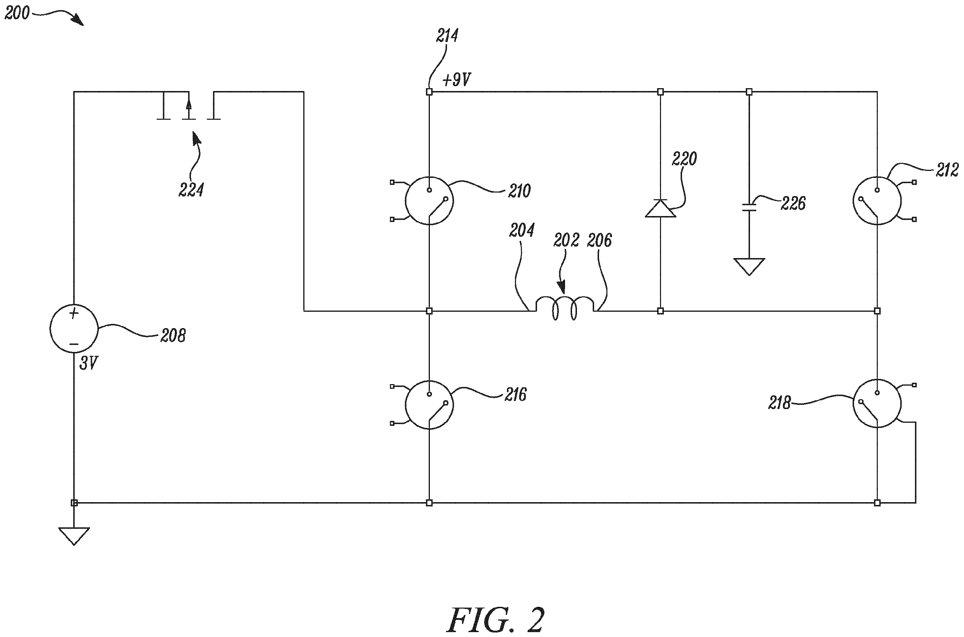

**FIG. 2** illustrates the driving circuit **200** for the electrical load **202**. The electrical load **202** may be any one of the one or more valves **108**, **110** (shown in **FIG. 1****)**. The one or more valves **108**, **110** may be an irrigation valve. The electrical load **202** is an inductance coil having a first terminal **204** and a second terminal **206**. The driving circuit **200** includes a power source **208** having a positive terminal and a negative terminal. The power source **208** is a combination of two or more batteries connected in series, e.g., two 1.5 V batteries. The power source **208** may also be one 3 V battery. The driving circuit **200** includes a first high-side switch **210**, in particular semiconductor switch **210**, more in particular transistor **210**, and a second high-side switch **212**, in particular semiconductor switch **212**, more in particular transistor **212**. The first high-side transistor **210** and the second high-side transistor **212** are MOSFET. The first high-side transistor **210** connects the first terminal **204** of the electrical load **202** with a high potential terminal **214**. The second high-side transistor **212** connects the second terminal **206** of the electrical load **202** with the high potential terminal **214**.

The driving circuit **200** further includes a first low-side switch **216**, in particular semiconductor switch **216**, more in particular transistor **216**, and a second low-side semiconductor switch **218**, in particular transistor **218**. The first low-side transistor **216** and the second low-side transistor **218** are MOSFET. The first low-side transistor **216** connects the first terminal **204** of the electrical load G**202** with a negative terminal of the power source **208**. The second low-side transistor **218** connects the second terminal **206** of the electrical load **202** with the negative terminal of the power source **208**. The driving circuit **200** includes a free-wheeling diode **220** connecting the second terminal **206** of the electrical load **202** with the high potential terminal **214** for providing a path for current from the electrical load **202** to the high potential terminal **214**.

The driving circuit **200** further includes the controller **102** for controlling the operation of the first high-side switch **210**, in particular semiconductor switch **210**, more in particular transistor **210**, and the second high-side switch **212**, in particular semiconductor switch **212**, more in particular transistor **212**, and the first low-side switch **216**, in particular semiconductor switch **216**, more in particular transistor **216**, and the second low-side semiconductor switch **218**, in particular transistor **218**. The driving circuit **200** further includes a boost circuit which boosts the voltage provided by the power source **208** to a higher voltage for driving the electrical load **202**. The driving circuit **200** is characterized in that the boost circuit includes a third high-side switch **224**, in particular semiconductor switch **224**, more in particular transistor **224**, to connect the first terminal **204** of the electrical load **202** with the positive terminal of the power source **208**. The third high-side switch **224**, in particular semiconductor switch **224**, more in particular transistor **224**, is a MOSFET. The driving circuit **200** further includes a capacitor **226** which connects the high potential terminal **214** and the negative terminal of the power source **208**. The capacitor **226** provides the higher voltage to the electrical load **202**. An inductance of the boost circuit is a coil of the electrical load **202**. A diode of the boost circuit is the free-wheeling diode **220**. A semiconductor switch, in particular transistor, of the boost circuit is the second low-side semiconductor switch **218**, in particular transistor **218**. Further, the controller **102** controls the operation of the third high-side transistor **224**. Therefore, the driving circuit **200** makes use of existing components in the driving circuit **200** to boost the voltage of the power source **208** to be provided to the electrical load **202**.

The electrical load **202** may operate in two modes, a first operating mode and a second operating mode. For example, the electrical load **202** may be an irrigation valve configured to switch between an open position and a closed position, wherein the first operating mode may correspond to the open position and the second operating mode may correspond to the closed position or vice versa. The closed position is defined when current flows through the electrical load **202** from the first terminal **204** to the second terminal **206**. The open position is defined when the current flows through the electrical load **202** from the second terminal **206** to the first terminal **204**. For the electrical load **202** to operate in the closed position, the first high-side transistor **210** and the second low-side transistor **218** are switched on. Similarly, for the electrical load **202** to operate in the open position, the second high-side transistor **212** and the first low-side transistor **216** are switched on. Thus, the controller **102** can control the operation of the electrical load **202** by suitably switching the first high-side transistor **210**, the second high-side transistor **212**, the first low-side transistor **216**, and the second low-side transistor **218**.

During a charge cycle of the boost circuit, the third high-side switch **224**, in particular semiconductor switch **224**, more in particular transistor **224**, and the second low-side semiconductor switch **218**, in particular transistor **218**, are switched on, and the first high-side switch **210**, in particular semiconductor switch **210**, more in particular transistor **210**, the second high-side switch **212**, in particular semiconductor switch **212**, more in particular transistor **212**, and the first low-side switch **216**, in particular semiconductor switch **216**, more in particular transistor **216**, are switched off by the controller **102**. As a result, the free-wheeling diode **220** is reverse biased and the electrical load **202** is charged by the power source **208**. During a discharge cycle of the boost circuit, the third high-side switch **224**, in particular semiconductor switch **224**, more in particular transistor **224**, is switched on and the first high-side switch **210**, in particular semiconductor switch **210**, more in particular transistor **210**, and the second high-side switch **212**, in particular semiconductor switch **212**, more in particular transistor **212**, and the first low-side switch **216**, in particular semiconductor switch **216**, more in particular transistor **216**, and the second low-side semiconductor switch **218**, in particular transistor **218**, are switched off by the controller **102**. As a result, the free-wheeling diode **220** is forward biased and the electrical load **202** discharges energy stored during the first cycle and stores the energy in the boost circuit capacitor **226**.

When the voltage across the boost circuit capacitor reaches 9 V, the third high-side transistor **224** is switched off by the controller **102** and the driving circuit **200** operates the electrical load **202** using the boosted voltage in two operating modes. In the first operating mode, the first high-side transistor **210** and the second low-side transistor **218** are switched on and the second high-side transistor **212** and the first low-side transistor **216** are switched off. In the second operating mode, the first high-side transistor **210** and the second low-side transistor **218** are switched off and the second high-side transistor **212** and the first low-side transistor **216** are switched on.

In the drawings and specification, there have been disclosed exemplary embodiments and examples of the invention and, although specific terms are employed, they are used in a generic and descriptive sense only and not for the purpose of limitation of the scope of the invention being set forth in the following claims.

### LIST OF ELEMENTS

- **100**: Irrigation system
- **102**: Controller
- **104**: First watering equipment
- **106**: Second watering equipment
- **108**: Valve
- **110**: Valve
- **200**: Driving circuit
- **202**: Electrical load
- **204**: First terminal
- **206**: Second terminal
- **208**: Power source
- **210**: First high-side switch/semiconductor switch/transistor
- **212**: Second high-side switch/semiconductor switch/transistor
- **214**: High potential terminal
- **216**: First low-side switch/semiconductor switch/transistor
- **218**: Second low-side semiconductor switch/transistor
- **220**: Free-wheeling diode
- **224**: Third high-side switch/semiconductor switch/transistor
- **226**: Capacitor
- **300**: Driving circuit (Prior art)
- **302**: Electrical load
- **304**: Power source
- **306**: First segment
- **308**: Second segment
- **310**: First high-side transistor
- **312**: Second high-side transistor
- **314**: First terminal of electrical load
- **316**: Second terminal of electrical load
- **318**: High potential terminal
- **320**: First low-side transistor
- **322**: Second low-side transistor
- **324**: Free-wheeling diode
- **326**: Inductance coil
- **328**: First end of inductance coil
- **330**: Second end of inductance coil
- **332**: Boost circuit diode
- **334**: Boost circuit capacitor
- **336**: Boost circuit transistor
- **338**: Controller

## Claims

1. A driving circuit **(200)** for driving an electrical load **(202)** comprising:
a first high-side switch **(210)**, in particular semiconductor switch **(210)**, more in particular transistor **(210)**, and a second high-side switch **(212)**, in particular semiconductor switch **(212)**, more in particular transistor **(212)**, wherein the first high-side switch **(210)** is configured to connect a first terminal **(204)** of the electrical load **(202)** with a high potential terminal **(214)**, and the second high-side switch **(212)** is configured to connect a second terminal **(206)** of the electrical load **(202)** with the high potential terminal **(214)**;
a first low-side switch **(216)**, in particular semiconductor switch **(216)**, more in particular transistor **(216)**, and a second low-side semiconductor switch **(218)**, in particular transistor **(218)**, wherein the first low-side switch **(216)** is configured to connect the first terminal **(204)** of the electrical load **(202)** with a negative terminal of a power source **(208)** and the second low-side switch **(218)** is configured to connect the second terminal **(206)** of the electrical load **(202)** with the negative terminal of the power source **(208)**;
a free-wheeling diode **(220)** configured to connect the second terminal **(206)** of the electrical load **(202)** with the high potential terminal **(214)** for providing a path for current from the electrical load **(202)** to the high potential terminal **(214)**;
a controller **(102)** for controlling the operation of the first high-side switch **(210)** and the second high-side switch **(212)** and the first low-side switch **(216)** and the second low-side semiconductor switch **(218)**; and
a boost circuit configured to boost the voltage provided by the power source **(208)** to a higher voltage for driving the electrical load **(202)**;
**characterized in that:**
the boost circuit includes:
a third high-side switch **(224)**, in particular semiconductor switch **(224)**, more in particular transistor **(224)**, to connect the first terminal **(204)** of the electrical load **(202)** with the positive terminal of the power source **(208)**; and
a capacitor **(226)** configured to connect the high potential terminal **(214)** and the negative terminal of the power source **(208)**, wherein the capacitor **(226)** is configured to provide the higher voltage to the electrical load **(202)**;
wherein an inductance of the boost circuit is provided by a coil of the electrical load **(202)**;
wherein a diode of the boost circuit is provided by the free-wheeling diode **(220)**;
wherein a transistor of the boost circuit is provided by the second low-side transistor **(218)**; and
wherein the controller **(102)** is further configured to control the operation of the
third high-side switch **(224)**.

2. The driving circuit **(200)** of claim 1,
wherein the free-wheeling diode **(220)** is a diode, in particular intrinsic diode, of the second high-side switch **(212).**

3. The driving circuit **(200)** of claim 1,
wherein the free-wheeling diode **(220)** is a separate electronic element.

4. The driving circuit **(200)** of any one of the preceding claims,
wherein the power source **(208)** is a 3 V DC power source.

5. The driving circuit **(200)** of claim 4,
wherein the boost circuit boosts the voltage provided by the 3 V DC power source to 9V.

6. The driving circuit **(200)** of any of the preceding claims,
wherein each of the first high-side switch **(210)**, the second high-side switch **(212)** and the third high-side switch **(224)** is a MOSFET.

7. The driving circuit **(200)** of any of the preceding claims,
wherein each of the first low-side switch **(216)** and the second low-side semiconductor switch **(218)** is a MOSFET.

8. The driving circuit **(200)** of any of the preceding claims,
wherein the electrical load **(202)** is an irrigation valve.

9. An irrigation system **(100)** comprising
one or more valves **(108**, **110)**, and
the driving circuit **(200)** of any one of the preceding claims,
wherein the one or more valves **(108**, **110)** is actuated by the driving circuit **(200)**.
